# EUROPÄISCHE PATENTSCHRIFT

(11) **EP 3 702 077 B1**
(45) Veröffentlichungstag und Bekanntmachung des Hinweises auf die Patenterteilung: **26.08.2026**
(21) Anmeldenummer: 19200980.1
(22) Anmeldetag: 02.10.2019
(51) Int. Cl.: B23B 51/02

(54) **BOHRWERKZEUG**
DRILLING TOOL
OUTIL DE PERÇAGE

(30) Priorität: 28.02.2019 AT 501632019
(43) Veröffentlichungstag der Anmeldung: 02.09.2020
(73) Patentinhaber: Alpen-Maykestag GmbH, 5412 Puch (AT)
(72) Erfinder: PORTENKIRCHNER, Gerhard, 5412 Puch (AT)
(74) Vertreter: TBK

(56) Entgegenhaltungen:
- FR-A1- 2 851 945
- US-A- 5 350 261
- US-A1- 2004 052 597
- US-A1- 2015 360 302
- US-A1- 2017 120 349

## Beschreibung

Die Erfindung betrifft ein Bohrwerkzeug, und genauer ein Bohrwerkzeug mit einem Bohrlochlängenindikator gemäß dem Oberbegriff des Anspruchs 1. Die Merkmale des Oberbegriffs des Anspruchs 1 sind aus der Druckschrift FR 2 851 945 A1 bekannt.

Aus dem Stand der Technik, dem Handel usw. sind Bohrwerkzeuge zum Bohren von insbesondere Mauerwerk aus Ziegeln, Beton, armiertem Beton und Stein bekannt. Als ein Beispiel für ein derartiges Bohrwerkzeug sei die Druckschrift EP 0 891 832 A1 genannt.

Derartige Bohrwerkzeuge (auch einfach als Bohrer bezeichnet), wie z.B. das aus der Druckschrift EP 0 891 832 A1 bekannte, weisen einen Schaft, einen Arbeitsbereich und einen Kopf auf. Der Schaft dient dabei zum Einspannen des Bohrers in ein Bohrfutter (SDS-Futter) einer geeigneten Maschine wie z.B. einem Bohrhammer oder einer Bohrmaschine. Der Arbeitsbereich weist eine oder mehrere spiralige Nuten auf, die zur Abfuhr von Bohrmehl dienen. Der Kopf dient zum Schneiden der Bohrung. Bekanntermaßen ist es üblich den Kopf mit einer Hartmetallplatte zu versehen. Dies reduziert den Verschleiß des Kopfes.

Zur Befestigung eines Gegenstands an einer Wand aus einem aus Mauerwerk, Beton, armiertem Beton oder Stein bestehenden Material ist es bekannt, Dübel einzusetzen, die mit Vorsprüngen in einer Art von Widerhaken versehen sind und in das Bohrloch eingesetzt werden. Ein Verbindungsmittel wie z.B. eine Schraube oder eine Gewindestange wird dann in den Dübel eingeschraubt, wodurch dieser in seinem Umfang erweitert (gespreizt) wird. Dadurch geraten die Widerhaken mit dem Material der Wand in Eingriff, und ein Herausziehen des Dübels ist unterbunden.

Dementsprechend muss das zu bohrende Loch (die Bohrung) eine die Länge des Dübels übersteigende Länge aufweisen. Ansonsten kann das Verbindungsmittel nicht so eingeschraubt werden, dass der Dübel ausreichend gespreizt wird. Die Länge der Bohrung steht dabei auch in Relation zum Durchmesser der Bohrung bzw. des Dübels.

Es ist allerdings auch nicht sinnvoll, die Länge der Bohrung so übermäßig auszuführen, dass ein großer Hohlraum zwischen der Spitze des eingeschraubten Verbindungsmittels und dem Ende der Bohrung verbleibt. Es kommt nämlich zu einem übermäßigen Verschleiß des Bohrwerkzeugs, wenn die Bohrung länger als notwendig ausgeführt wird.

Von handelsüblichen Bohrgeräten (z.B. Bohrmaschinen oder Bohrhämmern) ist es bekannt, in einem Bereich zwischen dem Futter und einem Griff der Maschine eine Stange anzuordnen, deren Längsachse parallel zu der Drehachse des Bohrwerkzeugs liegt. Die Stange ist in Richtung der Bohrerspitze verschiebbar ausgeführt. Somit ist es möglich, beim Bohren die Länge der Bohrung dadurch zu definieren, dass man die Spitze der Stange mit der Wand in Anlage bringt. Die Länge der Bohrung entspricht dann dem Abstand von der Spitze des Bohrwerkzeugs zu der Spitze der Stange.

Es ist allerdings mühsam, die Länge der Stange regelmäßig anzupassen, wenn Bohrungen unterschiedlicher Durchmesser zu bohren sind, da dann unterschiedliche Bohrungslängen erforderlich sind. Außerdem wirken beim Bohren entsprechende Kräfte und Momente auf die Aufnahme der Stange ein, wenn diese mit der Wand in Anlage gerät. Daher kann es hier zu Verschiebungen der Position der Stangenspitze und zu Verschleiß an der Stangenaufnahme kommen.

Die Druckschrift US 2004 / 052 597 A1 zeigt ein Bohrwerkzeug dessen Bohrnuten in Form von Facetten ausgebildet sind. Die Facetten und Übergänge sollen dafür sorgen, dass ein Überdruck im Bereich der Bohrerspitze entsteht.

Die Druckschrift US 5 350 261 A1 betrifft ein Bohrwerkzeug, bei dem die Kerndicke an einem vorbestimmten Abstand von der Spitze abnimmt.

Gemäß der Druckschrift FR 2 851 945 A1 kann eine Markierung (bzw. mehrere Markierungen) auf ein Bohrwerkzeug aufgebracht werden. Die Markierung wird zum Beispiel "durch Ätzen, Streichen, Bearbeiten, Lasermarkieren oder irgendein anderes geeignetes Verfahren" aufgebracht. Die Markierung ist bei Fertigung durch Lasergravur unauslöschlich. Bei Anbringung der Markierung in der Nut ist die Markierung vor Verschleiß geschützt.

Es ist die Aufgabe der Erfindung, ein Bohrwerkzeug mit einem einfach zu handhabenden und zuverlässigen Bohrlochlängenindikator bereitzustellen.

Die Aufgabe der Erfindung wird durch ein Bohrwerkzeug gemäß Anspruch 1 gelöst. Vorteilhafte Ausführungsformen sind gemäß den abhängigen Ansprüchen ausgeführt.

Ein erfindungsgemäßes Bohrwerkzeug hat einen Schaft, einen Arbeitsbereich und einen Kopf mit einer Spitze. Der Arbeitsbereich weist mindestens zwei um die Werkzeugachse umlaufende Nuten auf. An einer vorbestimmten Position in dem Arbeitsbereich, die entlang einer Längsachse des Bohrwerkzeugs einen vorbestimmten Abstand von der Spitze des Kopfs aufweist, ist ein Indikatorbereich vorgesehen. An dem Indikatorbereich ist die Tiefe der Nuten unterschiedlich zu der Tiefe der Nuten zwischen dem Kopf und dem Indikatorbereich und der Tiefe der Nuten zwischen dem Indikatorbereich und dem Schaft.

Der Indikatorbereich hebt sich in seiner Tiefe von der Tiefe der Nuten in dem verbleibenden Arbeitsbereich ab. Daher ist der Indikatorbereich bei einer schnellen Rotation des Bohrwerkzeugs, wie sie im Zuge eines Bohrvorgangs mit einer Bohrmaschine (z.B. Hammerbohrmaschine) auftritt, durch den Anwender optisch erfassbar. Der Indikatorbereich ist nämlich deutlich als Ring erkennbar, während sich das Bohrwerkzeug dreht. Auch bei einem Hammerbetrieb mit z.B. einer Schlagbohrmaschine oder einem Bohrhammer, während dem das Bohrwerkzeug nicht nur einer Drehung, sondern auch einer Hin- und Herbewegung entlang seiner Längsachse ausgesetzt ist, kann der Indikatorbereich optisch gut erfasst werden.

Vorteilhaft kann das Bohrwerkzeug vier umlaufende Nuten aufweisen.

Vorteilhaft kann sich eine Steigung eines Drallwinkels der umlaufenden Nuten zwischen dem Kopf und dem Schaft mindestens einmal ändern.

Vorteilhaft kann eine Änderung der Steigung an dem Indikatorbereich stattfinden.

Erfindungsgemäß ist der Indikatorbereich durch Ausheben eines spanenden Werkzeugs zur Fertigung der umlaufenden Nuten über eine vorbestimmte Länge erzeugt, wodurch der Indikatorbereich eine vergrößerte Kerndicke aufweist.

Vorteilhaft kann der Indikatorbereich zwei Indikatorflächen aufweisen. Dabei steigt eine erste Indikatorfläche von der Tiefe der Nut zu der Tiefe des Indikatorbereichs an. Die zweite Indikatorfläche fällt von der Tiefe des Indikatorbereichs zu der Tiefe der Nut ab.

Gemäß dieser Ausgestaltung ist der Indikatorbereich rampenartig ansteigend bzw. abfallend ausgebildet. Daher ist eine Abfuhr von Bohrmehl problemlos möglich, ohne dass Gefahr besteht dass sich das Bohrmehl aufgrund des in dem Indikatorbereich verkleinerten Nutquerschnitts ansammelt und die Nut verstopft. Der Indikatorbereich kann alternativ in Form einer Stufe vorgesehen sein.

Ein derartiges Bohrwerkzeug ist einfacher zu fertigen.

Vorteilhaft kann die Tiefe der Nut an dem Indikatorbereich zwischen 0,2 und 0,3 mm, bevorzugt um 0,25 mm verringert sein, und eine Länge des Indikatorbereichs kann zwischen 0,4 und 0.6 mm, bevorzugt 0,5 mm betragen.

Eine derzeit bevorzugte Ausführungsform der Erfindung wird anhand der anhängenden Figuren beschrieben. In den Figuren zeigt:
die Fig. 1 eine Draufsicht eines erfindungsgemäßen Bohrwerkzeugs; und

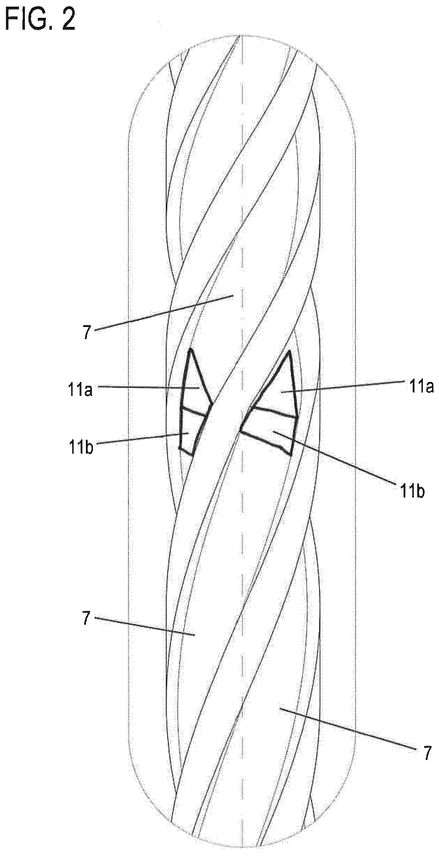

die Fig. 2 einen mit II bezeichneten Ausschnitt der Fig. 1.

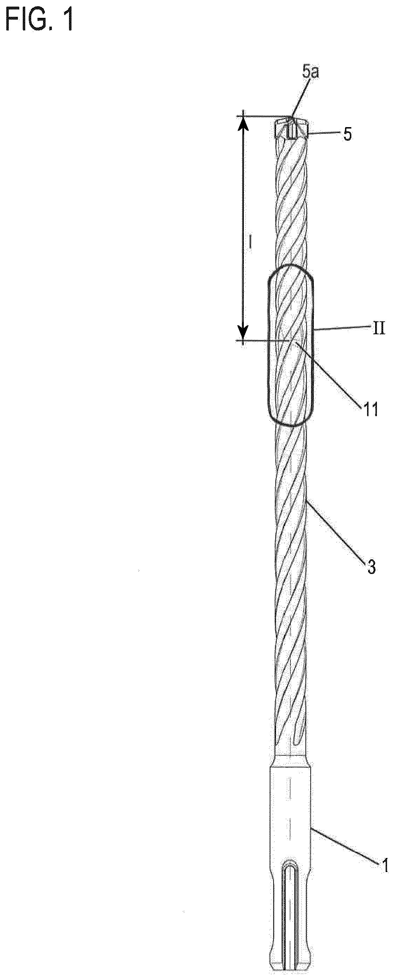

Das Bohrwerkzeug (im Folgenden auch als Bohrer bezeichnet) gemäß der Ausführungsform weist einen Schaft 1 auf, der zur Aufnahme des Bohrers in einer Aufnahme einer Maschine dient. Als Maschine kann eine handelsübliche Bohrmaschine, Hammerbohrmaschine, Bohrhammer usw. eingesetzt sein. Der in der Fig. 1 als Beispiel gezeigte Schaft ist zur Aufnahme in einer SDS-Halterung vorgesehen.

Anschließend an den Schaft 1 ist ein Arbeitsbereich 3 ausgebildet, der mit vier Fasen und zwischen diesen liegenden Spiralnuten 7 einer vorbestimmten Tiefe versehen ist. An einem in der Längsrichtung des Bohrers dem Schaft gegenüberliegenden Ende ist ein Kopf 5 mit einer Spitze 5a ausgebildet. Der Kopf 5 ist aus einem gesinterten Material ausgebildet, das mittels Hartlötung mit dem Material des Arbeitsbereichs 3 verbunden ist.

Eine vorbestimmte Länge von der Spitze 5a des Kopfs 5 in Richtung des Schafts 1 entfernt ist in den Nuten 7 ein Indikatorbereich 11 ausgebildet. An dem Indikatorbereich 11 ist der Querschnitt der Nuten 7 durch eine Verringerung der Nuttiefe verkleinert.

Der Indikatorbereich 11 weist zwei im Wesentlichen viereckige Indikatorflächen 11a und 11b auf. Dabei bildet die Indikatorfläche 11a einen gleichmäßigen Übergang in der Richtung von dem Kopf 5 zu dem Schaft 1 von der Tiefe der Nut 7 zur verringerten Tiefe der Nut 7 an dem Indikatorbereich 11. Die zweite Indikatorfläche 11b bildet einen Übergang einen gleichmäßigen Übergang in der Richtung von dem Kopf 5 zu dem Schaft 1 von der verringerten Tiefe der Nut 7 an dem Indikatorbereich 11 zurück zu der Tiefe der Nut 7.

Dadurch ist verhindert, dass sich ein abgeführtes Material wie z.B. Bohrmehl oder Späne in dem Indikatorbereich 11 ansammeln und die Nut 7 verstopfen.

Gemäß dem Ausführungsbeispiel werden die Nuten durch ein spanabhebendes Verfahren wie z.B. Fräsen oder Schleifen ausgebildet. Zur Herstellung des Indikatorbereichs wird das spanabhebende Werkzeug bei Erreichen der Position des Indikatorbereichs geringfügig, z.B. um 0,25 mm, ausgehoben und nach Abfahren einer vorbestimmten Länge, z.B. 0,5 mm, wieder abgesenkt. Dadurch ist es möglich, einen optisch als Ring deutlich wahrnehmbaren Indikatorbereich auszubilden.

Der Abstand I zwischen der Spitze 5a und dem Indikatorbereich 11 entspricht dabei einer für den Durchmesser des Bohrwerkzeugs vorgesehenen idealen Bohrlochtiefe. Die ideale Bohrlochtiefe ergibt sich in Relation zu dem Durchmesser eines in das Bohrloch einzuführenden Dübels (wie z.B. einem Spreizdübel aus Kunststoff) und einer zusätzlichen Länge eines über den Dübel hinaus in das Bohrloch ragenden Teils eines Befestigungsmittels wie einer Schraube oder einer Gewindestange. Beispielsweise beträgt für Dübeldurchmesser zwischen 4 und 20 mm diese zusätzliche Länge zwischen 5 und 30 mm, sodass sich der Abstand I zwischen der Spitze des Kopfs und dem Indikatorbereich aus der Länge des Dübels und dieser zusätzlichen Länge ergibt.

Dübelhersteller stellen auch Tabellen bereit, aus denen sich diese Längenangaben für jeden verfügbaren Durchmesser ablesen lassen.

Eine zweite bevorzugte Ausführungsform der Erfindung, die aber aus den Figuren nicht ersichtlich ist, betrifft ein Bohrwerkzeug wie das voranstehend beschriebene mit der Änderung, dass sich der Drallwinkel der Nuten einmal ändert. Gemäß der zweiten Ausführungsform befindet sich ein dem voranstehend beschriebenen Indikatorbereich 11 entsprechender Indikatorbereich an der Position, wo sich der Drallwinkel der Nuten ändert.

Das Bohrwerkzeug gemäß der zweiten Ausführungsform weist nämlich in dem Arbeitsbereich nahe des Kopfs Nuten mit einer geringen Steigung auf. Daher ist das Bohren mit diesem Bereich einfacher möglich, während die Abfuhr des Bohrmehls verlangsamt ist. Nahe dem Schaft weist der Arbeitsbereich wiederum Nuten mit einer größeren Steigung auf, wodurch es in diesem Bereich zu einer verbesserten Abfuhr des Bohrmehls kommt. Der Übergang zwischen dem Bereich mit den Nuten geringer Steigung und dem Bereich mit den Nuten größerer Steigung ist entsprechend der idealen Bohrlochlänge von der Spitze des Kopfs entfernt.

Der Indikatorbereich gemäß der zweiten Ausführungsform ist daher an diesem Übergang angeordnet.

Die Erfindung wurde anhand von derzeit bevorzugten Ausführungsformen beschrieben. Es sei aber darauf hingewiesen, dass diese Ausführungsformen lediglich als Beispiele dienen und nicht dazu vorgesehen sind, den Bereich der Erfindung zu beschränken.

So ist gemäß der Ausführungsform z.B. der Schaft mit einer SDS-Nut zur Aufnahme in einem SDS-Bohrfutter versehen. Der Schaft kann aber alternativ auch anders ausgestaltet sein, z.B. mit einem durchgehenden runden Querschnitt oder einem polygonförmigen Querschnitt.

Das Bohrwerkzeug gemäß der Ausführungsform ist zur Bearbeitung von Mauerwerk aus Ziegeln, Stein, Beton, oder armiertem Beton vorgesehen. Ein Indikatorbereich gemäß der Erfindung kann aber auch an einem Bohrwerkzeug vorgesehen sein, das zum Bohren von Holz oder zum Bohren von Metall vorgesehen ist.

## Patentansprüche

1. Bohrwerkzeug mit:
einem Schaft (1);
einem Arbeitsbereich (3); und
einem Kopf (5) mit einer Spitze (5a);
wobei der Arbeitsbereich (3) mindestens zwei um die Werkzeugachse umlaufende Nuten (7) aufweist;
wobei
an einer vorbestimmten Position in dem Arbeitsbereich (3), die entlang einer Längsachse des Bohrwerkzeugs einen vorbestimmten Abstand (I) von der Spitze (5a) des Kopfs (5) aufweist, ein bei einer Rotation des Bohrwerkzeugs optisch erfassbarer Indikatorbereich (11) einer für den Durchmesser des Bohrwerkzeugs vorgesehenen idealen Bohrlochtiefe vorgesehen ist, an dem die Tiefe der Nuten (7) unterschiedlich zu der Tiefe der Nuten zwischen dem Kopf (5) und dem Indikatorbereich (11) und der Tiefe der Nuten zwischen dem Indikatorbereich (11) und dem Schaft (1) ist,
**dadurch gekennzeichnet, dass**
der Indikatorbereich (11) durch Ausheben eines spanenden Werkzeugs zur Fertigung der umlaufenden Nuten (7) über eine vorbestimmte Länge erzeugt ist, wodurch der Indikatorbereich (11) eine vergrößerte Kerndicke aufweist.

2. Bohrwerkzeug nach Anspruch 1, wobei
das Bohrwerkzeug vier umlaufende Nuten aufweist.

3. Bohrwerkzeug nach Anspruch 1 oder 2, wobei
sich eine Steigung eines Drallwinkels der umlaufenden Nuten zwischen dem Kopf und dem Schaft mindestens einmal ändert.

4. Bohrwerkzeug nach Anspruch 3, wobei eine Änderung der Steigung an dem Indikatorbereich stattfindet.

5. Bohrwerkzeug nach einem der vorangehenden Ansprüche, wobei der Indikatorbereich (11) zwei Indikatorflächen (11a, 11b) aufweist, von denen eine erste Indikatorfläche (11a) von der Tiefe der Nut (7) zu der Tiefe des Indikatorbereichs (11) ansteigt, und die zweite Indikatorfläche (11b) von der Tiefe des Indikatorbereichs (11) zu der Tiefe der Nut abfällt.

6. Bohrwerkzeug nach einem der Ansprüche 1 bis 4, wobei der Indikatorbereich in Form einer Stufe vorgesehen ist.

7. Bohrwerkzeug nach einem der vorangehenden Ansprüche, wobei die Tiefe der Nut (7) an dem Indikatorbereich zwischen 0,2 und 0,3 mm, bevorzugt um 0,25 mm verringert ist.

8. Bohrwerkzeug nach einem der vorangehenden Ansprüche, wobei eine Länge des Indikatorbereichs (11) zwischen 0,4 und 0.6 mm, bevorzugt 0,5 mm beträgt.

## Claims

1. A drilling tool comprising:
A shaft (1);
a working region (3); and
a head (5) with a tip (5a);
wherein the working region (3) has at least two flutes (7) extending circumferentially around the tool axis;
wherein
at a predetermined position in the working region (3), which has a predetermined distance (I) from the tip (5a) of the head (5) along a longitudinal axis of the drilling tool, an indicator region (11), optically detectable at a rotation of the drilling tool, of an ideal borehole depth provided for the diameter of the drilling tool, is provided, in which the depth of the flutes (7) differs from the depth of the flutes between the head (5) and the indicator region (11) and the depth of the flutes between the indicator region (11) and the shaft (1),
**characterized in that**
the indicator region (11) is formed by lifting a cutting tool for machining the circumferential flutes (7) over a predetermined length, whereby the indicator region (11) has an increased core thickness.

2. The drilling tool according to claim 1, wherein
the drilling tool has four circumferential flutes.

3. The drilling tool according to claim 1 or 2, wherein
the incline of the helix angle of the circumferential flutes between the head and the shaft changes at least once.

4. The drilling tool according to claim 3, wherein a change in incline occurs in the indicator region.

5. The drilling tool according to one of the preceding claims, wherein the indicator region (11) has two indicator surfaces (11a, 11b), of which a first indicator surface (11a) slopes upwards from the depth of the flute (7) to the depth of the indicator region (11), and the second indicator surface (11b) slopes downward from the depth of the indicator region (11) to the depth of the flute.

6. The drilling tool according to any one of claims 1 to 4, wherein the indicator region is provided in the form of a step.

7. The drilling tool according to one of the preceding claims, wherein the depth of the flute (7) in the indicator region is reduced by between 0.2 and 0.3 mm, preferably by 0.25 mm.

8. The drilling tool according to one of the preceding claims, wherein a length of the indicator region (11) is between 0.4 and 0.6 mm, preferably 0.5 mm.

## Revendications

1. Outil de perçage comprenant :
une queue (1) ;
une région de travail (3) ; et
une tête (5) avec une pointe (5a) ;
la région de travail (3) comportant au moins deux goujures (7) s'étendant autour de l'axe de l'outil ;
dans lequel
à une position prédéterminée dans la région de travail (3), qui a une distance prédéterminée (I) de la pointe (5a) de la tête (5) le long d'un axe longitudinal de l'outil de perçage , une région indicatrice (11), optiquement détectable lors d'un tournage de l'outil de perçage, d'une profondeur de perçage idéale prévue pour le diamètre de l'outil de perçage, est prévue, à laquelle la profondeur des goujures (7) est différente de la profondeur des goujures entre la tête (5) et la région indicatrice (11) et de la profondeur des goujures entre la région indicatrice (11) et la queue (1),
**caractérisé en ce que**
la région indicatrice (11) est créée en retirant un outil de coupe pour réaliser les goujures circonférentielles (7) sur une longueur prédéterminée, de sorte que la région indicatrice (11) a une épaisseur d'âme accrue.

2. Outil de perçage selon la revendication 1, dans lequel
l'outil de perçage comporte quatre goujures circonférentielles.

3. Outil de perçage selon la revendication 1 ou 2, dans lequel
une pente d'un l'angle d'hélice des goujures circonférentielles change au moins une fois entre la tête et la queue.

4. Outil de perçage selon la revendication 3, dans lequel un changement de la pente s'effectue à la région indicatrice.

5. Outil de perçage selon l'une des revendications précédentes, la région indicatrice (11) comportant deux surfaces indicatrices (11a, 11b), dont une première surface indicatrice (11a) s'élève de la profondeur de la goujure (7) vers la profondeur de la région indicatrice (11), et la deuxième surface indicatrice (11b) s'abaisse de la profondeur de la région indicatrice (11) vers la profondeur de la goujure.

6. Outil de perçage selon l'une des revendications 1 à 4, la région indicatrice étant prévue en forme d'une marche.

7. Outil de perçage selon l'une des revendications précédentes, la profondeur de la goujure (7) à la région indicatrice étant réduite d'entre 0,2 à 0,3 mm, de préférence de 0,25 mm.

8. Outil de perçage selon une des revendications précédentes, une longueur de la région indicatrice (11) étant d'entre 0,4 et 0,6 mm, de préférence de 0,5 mm.
